# EUROPÄISCHE PATENTSCHRIFT

(11) **EP 1 321 640 B1**
(45) Veröffentlichungstag und Bekanntmachung des Hinweises auf die Patenterteilung: **16.02.2005**
(21) Anmeldenummer: 02026507.0
(22) Anmeldetag: 27.11.2002
(51) Int. Cl.: F01N 3/00, F01N 3/021, F01N 3/10, F01N 3/035, F01N 1/02, F01N 3/28, F01N 1/00, F01N 3/02, F01N 3/033

(54) **Abgassammeldämpfer mit integriertem Abgasnachbehandlungssystem**
Silencer with exhaust gas after-treatment system
Silencieux d'échappement avec un système de traitement des gaz d'échappement

(30) Priorität: 01.12.2001 DE 10159158
(43) Veröffentlichungstag der Anmeldung: 25.06.2003
(73) Patentinhaber: DEUTZ Aktiengesellschaft, 51063 Köln (DE)
(72) Erfinder: Miebach, Rolf, 50321 Brühl (DE); Bauer, Lothar, 51109 Köln (DE)

(56) Entgegenhaltungen:
- EP-A- 0 718 479
- DE-A- 2 853 720
- DE-C- 4 020 867
- FR-A- 2 719 786
- GB-A- 1 418 826
- US-A- 3 247 666
- US-A- 3 972 184
- US-A- 4 663 934
- US-A- 5 388 407
- PATENT ABSTRACTS OF JAPAN vol. 017, no. 226 (M-1405), 10. Mai 1993 (1993-05-10) -& JP 04 358718 A (TOYOTA MOTOR CORP), 11. Dezember 1992 (1992-12-11)

## Beschreibung

Die Erfindung betrifft eine Brennkraftmaschine mit einem Kurbelgehäuse, in dem eine Kurbelwelle drehbar gelagert ist, an der zumindest ein einen Kolben tragendes Pleuel angelenkt ist, wobei der Kolben in einem von einem Zylinderkopf unter Bildung eines Arbeitsraums abgedeckten Zylinder bewegbar ist, wobei in dem Zylinderkopf mit einem Frischgassystem und einem Abgassystem zusammenwirkende Gaswechseleinrichtungen vorgesehen sind, wobei das Abgassystem zumindest einen in dem Zylinderkopf eingelassenen Abgaskanal und einen damit strömungsverbundenen außen an dem Zylinderkopf angeordneten Abgassammler mit einem Abgasnachbehandlungssystem aufweist.

Eine derartige Brennkraftmaschine ist aus der EP-A 0 199 471 bekannt. Diese Brennkraftmaschine weist ein Abgassystem mit einem an dem Zylinderkopf angeordneten Abgassammler mit einem eingesetzten Abgasnachbehandlungssystem auf. Dabei ist das Abgasnachbehandlungssystem in zwei Teilsysteme aufgeteilt, die jeweils zwei Zylindern zugeordnet sind. Das Abgas gelangt über Einlasskanäle in den entsprechenden Teil des Sammlers, in dem auch die Abgasnachbehandlungseinrichtung eingesetzt ist. Durch die Abgasnachbehandlungseinrichtung gelangt das Abgas in einen zentralen, zwischen den beiden Teilbereichen angeordneten Sammelkanal, von wo aus das Abgas weitergeleitet wird.

Weiterhin ist aus der JP-A 04358718 eine Brennkraftmaschine bekannt, bei der ein Abgassammler vorgesehen ist, der am Zylinderkopf einer Brennkraftmaschine befestigt ist. Dieser Abgassammler weist eine grundsätzlich herkömmliche Ausgestaltung auf, wobei der Abgasaustritt aus diesem Abgassammler einen Flansch aufweist, an den ein Gehäuse mit einem integrierten Abgasschalldämpfer anschraubbar ist und gleichzeitig in die Flanschverbindung ein Abgasnachbehandlungssystem eingesetzt ist.

Der Erfindung liegt die Aufgabe zugrunde, eine Brennkraftmaschine mit einem Abgassystem in der Form weiterzubilden, dass ein umfassendes kompaktes System geschaffen ist.

Diese Aufgabe wird dadurch gelöst, dass der Abgassammler, ein Abgasschalldämpfer und das einen Rußfilter aufweisende Abgasnachbehandlungssystem in einem einzigen Gehäuse so zusammengefasst sind, dass die akustischen Eigenschaften des Abgassammlers und des Abgasnachbehandlungssystems ohne separaten Abgasschalldämpfer ausgenutzt und aufeinander abgestimmt sind und dass das Gehäuse über mit dem Gehäuse verbundenen Kanäle und Flansche direkt an dem Zylinderkopf befestigt ist. Durch diese Ausbildung wird ein äußerst kompaktes Gesamtsystem geschaffen, das darüber hinaus den Vorteil hat, dass durch die Zusammenfassung eine optimale Abstimmung der Einzelkomponenten aufeinander möglich ist. Insbesondere können die akustischen Eigenschaften des Abgassammlers und insbesondere des Abgasnachbehandlungssystems ausgenutzt und aufeinander abgestimmt werden. Dadurch ist ein separater Abgasschalldämpfer entbehrlich und dessen Funktion wird zumindest teilweise von dem Abgassammler und dem Abgasnachbehandlungssystem gegebenenfalls unter Verwendung von akustisch wirkenden Elementen erbracht. Zudem wird eine Brennkraftmaschine von vorzugsweise dem Brennkraftmaschinenhersteller bereitgestellt, die bezüglich der Abgasanlage keiner Ergänzungen bedarf.

In Weiterbildung der Erfindung ist jeder Flansch direkt mit dem Abgaskanal in dem Zylinderkopf verbunden. Dadurch ist eine platzsparende direkte Anbindung an die Brennkraftmaschine hergestellt.

In weiterer Ausgestaltung der Erfindung weist das Abgasnachbehandlungssystem einen Rußfilter und/oder einen Oxydationskatalysator auf. Insbesondere bei der Kombination des Rußfilters mit dem Oxydationskatalysator können die Emissionswerte auf sehr geringe Werte gesenkt und auch künftige Grenzwerte eingehalten werden.

In Weiterbildung der Erfindung ist eingangsseitig zu dem Abgasnachbehandlungssystem ein Strömungsverteiler angeordnet. Dieser hat einerseits akustische Eigenschaften und verteilt gleichzeitig das Abgas so in das Abgasnachbehandlungssystem, dass eine gleichmäßige Beaufschlagung beispielsweise des Rußfilters erreicht ist.

In weiterer Ausgestaltung der Erfindung erfolgt der Abgaseintritt aus den einzelnen Zylindern in einen offenen Eintrittsraum des Gehäuses wobei in weiterer Ausgestaltung innerhalb des Eintrittsraums oder angrenzend an den Eintrittsraum ebenfalls in Längsrichtung das Abgasnachbehandlungssystem angeordnet ist. Dies stellt insbesondere bezüglich der Raumausnutzung eine günstige Lösung dar.

In Weiterbildung der Erfindung ist an einer Stirnseite des Gehäuses der den Eintrittsraum mit dem Abgasnachbehandlungssystem verbindende Strömungsverteiler angeordnet. Durch diese wird der vorhandene Raum optimal ausgenutzt.

Weitere vorteilhafte Ausgestaltung der Erfindung sind der Zeichnungsbeschreibung zu entnehmen, in der in den Figuren dargestellte Ausführungsbeispiele näher beschrieben sind.

Es zeigen:
- Fig.1:: Eine perspektivische Gesamtansicht der Brennkraftmaschine mit einem Abgassammeldämpfer mit integriertem Abgasnachbehandlungssystem,
- Fig. 2:: eine schwungradseitige Ansicht der Brennkraftmaschine mit geschnittenem Abgassammeldämpfer,
- Fig. 3:: einen Längsschnitt durch den Abgassammeldämpfer mit großem Eintrittsvolumen und

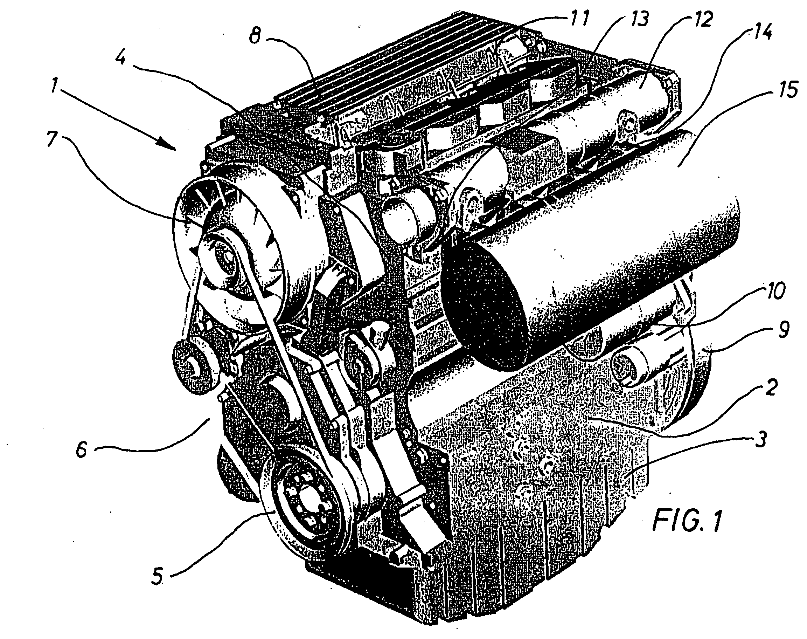

Die Brennkraftmaschine 1 gemäß Fig. 1 ist eine selbstzündende Brennkraftmaschine mit integriertem Kühlsystem. Die Brennkraftmaschine 1 weist ein Kurbelgehäuse 2 auf, das nach unten von einer Ölwanne 3 abgeschlossen ist und in dem eine Kurbelwelle drehbar gelagert ist. An die Kurbelwelle sind vier Pleuel angelenkt, die in von einem gemeinsamen Zylinderkopf 4 abgedeckten Zylindern unter Bildung eines Arbeitsraums bewegbar sind. Frontseitig der Brennkraftmaschine 1 ist an die Kurbelwelle vor einem Zahnriemenrad zum Antrieb der Nockenwelle, die Gaswechselsteuerungsnocken und jedem Zylinder zugeordnete Einspritzpumpennocken aufweist, ein Keilriemenrad 5 angeordnet, das über einen Keilriemen 6 das integrierte Kühlgebläse 7 antreibt, wobei in das Kühlgebläse 7 die Lichtmaschine integriert ist. Das Kühlgebläse 7 fördert Kühlluft durch den zylinderkopfseitig angeordneten Luft-Öl-Wärmetauscher 8 und zumindest teilweise entlang und durch den Zylinderkopf 4. Das den Luft-Öl-Wärmetauscher 8 durchströmende Öl ist das Schmiermittel und das Kühlmittel der Brennkraftmaschine. Auf der rückwärtigen Seite der Brennkraftmaschine 1 ist an die Kurbelwelle ein Schwungrad 9 montiert und auch der Anlasser 10 angeordnet.

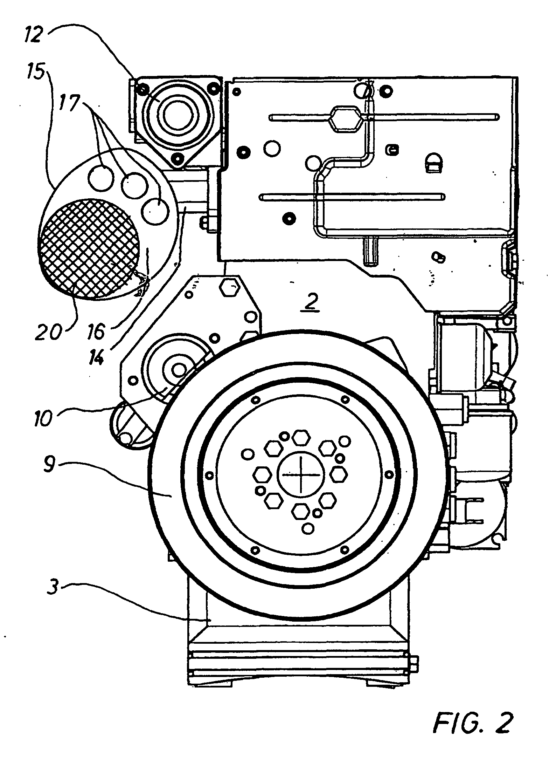

Der Kraftstoff wird über von den Einspritzpumpennocken angetriebenen Einzeleinspritzpumpenelementen über kurze Einspritzleitungen 11 und Einspritzventile in den jeweiligen Arbeitsraum eingespritzt. Diesem Arbeitsraum wird über die Gaswechselkanäle des Frischgassystems gesteuert von den Gaswechseleinrichtungen Verbrennungsluft zugeführt, die über eine Verbrennungsluftleitung 12 verdichtet oder nicht verdichtet zugeführt wird. Die Gaswechselventile der Gaswechseleinrichtungen steuern weiterhin den Auslass des verbrannten Kraftstoff-Luftgemisches (Abgas) über Abgaskanäle, die unterhalb der Verbrennungsluftleitung 12 an der Seitenwand des Zylinderkopfs 4 münden. Diese Abgaskanäle sind über kurze Kanäle 14, die jeweils mit einem Flansch 13 (Fig. 2) an dem Zylinderkopf befestigt sind, mit dem Abgassammeldämpfer mit integriertem Abgasnachbehandlungssystem verbunden. Der Abgassammeldämpfer weist ein Gehäuse 15 auf, das den Abgassammler, den Abgasschalldämpfer und das Abgasnachbehandlungssystem beinhaltet bzw. darstellt.

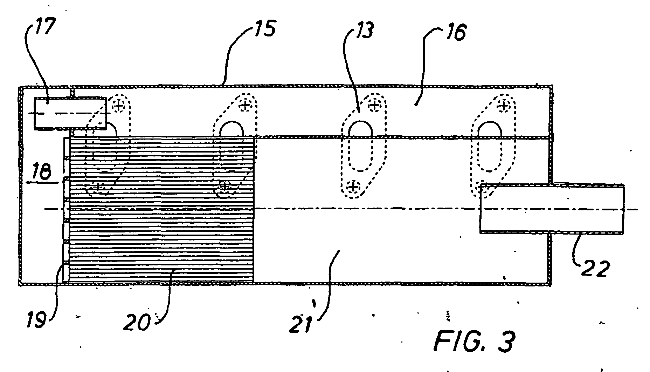

In der Ansicht gemäß Fig. 2 von der Schwungradseite der Brennkraftmaschine 1 her sind im wesentlichen die schon zuvor erläuterten Komponenten der Brennkraftmaschine ersichtlich und insbesondere ein Schnitt durch das Gehäuse 15 dargestellt. Das Gehäuse 15 weist einen Eingangsbereich 16 auf, der direkt mit den Kanälen 14 in Verbindung steht. Stirnseitig ist der Eingangsbereich 16 über drei Übertrittsrohre 17 mit einem Eingangsraum 18 (Fig. 3) verbunden, der über einen Strömungsverteiler 19 in das Abgasnachbehandlungssystem 20, das insbesondere ein Rußfilter ist, mündet. An das Abgasnachbehandlungssystem 20 schließt in der Ausführung nach Figur 3 ein Nachschalldämpfer 21 an, der über ein Auslassrohr 22 in die Umgebung einmündet. Das gesamte in dem Gehäuse 15 angeordnete System ist so abgestimmt, dass es neben der Zusammenführung der Abgase aus den einzelnen Arbeitsräumen der Brennkraftmaschine 1 die Nachbehandlung, insbesondere die Rußfilterung und die Schalldämpfung übernimmt. Dazu sind die einzelnen Komponenten aufeinander abgestimmt.

## Patentansprüche

1. Brennkraftmaschine mit einem Kurbelgehäuse, in dem eine Kurbelwelle drehbar gelagert ist, an der zumindest ein einen Kolben tragendes Pleuel angelenkt ist, wobei der Kolben in einem von einem Zylinderkopf unter Bildung eines Arbeitsraums abgedeckten Zylinder bewegbar ist, wobei in dem Zylinderkopf mit einem Frischgassystem und einem Abgassystem zusammenwirkende Gaswechseleinrichtungen vorgesehen sind, wobei das Abgassystem zumindest einen in dem Zylinderkopf eingelassenen Abgaskanal und einen damit strömungsverbundenen außen an dem Zylinderkopf angeordneten Abgassammler mit einem Abgasnachbehandlungssystem aufweist,
**dadurch gekennzeichnet, dass** der Abgassammler, ein Abgasschalldämpfer und das einen Rußfilter aufweisende Abgasnachbehandlungssystem (20) in einem einzigen Gehäuse (15) so zusammengefasst sind, dass die akustischen Eigenschaften des Abgassammlers und des Abgasnachbehandlungssystems (20) ohne separaten Abgasschalldämpfer ausgenutzt und aufeinander abgestimmt sind und dass das Gehäuse (15) über mit dem Gehäuse (15) verbundenen Kanäle (14) und Flansche (13) direkt an dem Zylinderkopf (4) befestigt ist.

2. Brennkraftmaschine nach Anspruch 1,
**dadurch gekennzeichnet, dass** jeder Flansch (13) direkt mit dem Abgaskanalin dem Zylinderkopf (4) verbunden ist.

3. Brennkraftmaschine nach einem der vorherigen Ansprüche,
**dadurch gekennzeichnet, dass** das Abgasnachbehandlungssystem (20) einen Rußfilter und/oder einen Oxidationskatalysator aufweist.

4. Brennkraftmaschine nach einem der vorherigen Ansprüche,
**dadurch gekennzeichnet, dass** eingangsseitig zu dem Abgasnachbehandlungssystem (20) ein Strömungsverteiler (19) angeordnet ist.

5. Brennkraftmaschine nach einem der vorherigen Ansprüche,
**dadurch gekennzeichnet, dass** das Gehäuse (15) in Längsrichtung des Zylinderkopfes (4) parallel zu einer Zylinderreihe der Brennkraftmaschine (1) angeordnet ist.

6. Brennkraftmaschine nach einem der vorherigen Ansprüche,
**dadurch gekennzeichnet, dass** der Abgaseintritt aus den einzelnen Zylindern in einen offenen Eintrittsraum (18) des Gehäuses (15) erfolgt.

7. Brennkraftmaschine nach Anspruch 6,
**dadurch gekennzeichnet, dass** innerhalb des Eintrittsraums (18) oder angrenzend an den Eintrittsraum (18) ebenfalls in Längsrichtung das Abgasnachbehandlungssystem (20) angeordnet ist.

8. Brennkraftmaschine nach Anspruch 4,
**dadurch gekennzeichnet, dass** auf einer Stirnseite des Gehäuses (15) der den Eintrittsraum (18) mit dem Abgasnachbehandlungssystem (20) verbindende Strömungsverteiler (19) angeordnet ist.

## Claims

1. Internal combustion engine having a crankcase, in which is mounted rotatably a crankshaft on which at least one connecting rod bearing a piston is articulatedly mounted, the piston being moveable in a cylinder covered by a cylinder head to form a working space, gas exchange devices which interact with a fresh gas system and an exhaust gas system being provided in the cylinder head, the exhaust gas system having at least one exhaust pipe, which is admitted to the cylinder head, and an exhaust manifold, which is flow-connected to the exhaust pipe and is arranged on the outside of the cylinder head, with an exhaust-gas aftertreatment system, **characterized in that** the exhaust manifold, an exhaust silencer and the exhaust-gas aftertreatment system (20), which includes a particulate filter, are combined with a single housing (15) in such a way that the acoustic properties of the exhaust manifold and the exhaust-gas aftertreatment system (20) are utilized and matched to one another without separate exhaust silencers, and **in that** the housing (15) is directly secured to the cylinder head (4) by means of flanges (13) and passages (14) connected to the housing (15).

2. Internal combustion engine according to Claim 1, **characterized in that** each flange (13) is directly connected to the exhaust pipe in the cylinder head (4).

3. Internal combustion engine according to one of the preceding claims, **characterized in that** the exhaust-gas aftertreatment system (20) includes a particulate filter and/or an oxidation catalytic converter.

4. Internal combustion engine according to one of the preceding claims, **characterized in that** a flow distributor (19) is arranged on the entry side to the exhaust-gas aftertreatment system (20).

5. Internal combustion engine according to one of the preceding claims, **characterized in that** the housing (15) is arranged in the longitudinal direction of the cylinder head (4) parallel to a cylinder bank of the internal combustion engine (1).

6. Internal combustion engine according to one of the preceding claims, **characterized in that** the exhaust gas from the individual cylinders enters an open inlet space (18) of the housing (15).

7. Internal combustion engine according to Claim 6, **characterized in that** the exhaust-gas aftertreatment system (20) is arranged within the inlet space (18) or adjacent to the inlet space (18), likewise in the longitudinal direction.

8. Internal combustion engine according to Claim 4, **characterized in that** the flow distributor (19), which connects the inlet space (18) to the exhaust-gas aftertreatment system (20), is arranged on an end side of the housing (15).

## Revendications

1. Moteur à combustion interne présentant un carter de moteur dans lequel s'appuie en rotation un arbre à manivelle auquel est articulé au moins une bielle supportant un piston, le piston étant mobile dans un cylindre recouvert par une culasse en formant une chambre de travail, étant prévus dans la culasse des dispositifs d'échange de gaz coopérant avec un système de gaz frais et un système de gaz d'échappement, le système de gaz d'échappement présentant au moins un canal à gaz d'échappement emboîté dans la culasse et un collecteur de gaz d'échappement relié à celui-ci au niveau écoulement et disposé à l'extérieur sur la culasse avec un système de traitement de gaz d'échappement,
**caractérisé en ce que** le collecteur de gaz d'échappement, un silencieux d'échappement et le système de traitement de gaz d'échappement (20) présentant un filtre à suie sont regroupés dans un seul boîtier (15) de manière à ce que les propriétés acoustiques du collecteur de gaz d'échappement et du système de traitement de gaz d'échappement (20) soient utilisées sans silencieux séparé et soient définies les unes en fonction des autres et que le boîtier (15) soit fixé par le biais de canaux (14) et de brides (13) reliés au boîtier (15) directement sur la culasse (4).

2. Moteur à combustion interne selon la revendication 1,
**caractérisé en ce que** chaque bride (13) est reliée directement au canal à gaz d'échappement dans la culasse (4).

3. Moteur à combustion interne selon l'une quelconque des revendications précédentes,
**caractérisé en ce que** le système de traitement de gaz d'échappement (20) présente un filtre à suie et/ou un catalyseur d'oxydation.

4. Moteur à combustion interne selon l'une quelconque des revendications précédentes,
**caractérisé en ce que**, du côté de l'entrée du système de traitement de gaz d'échappement (20), un distributeur d'écoulement (19) est disposé.

5. Moteur à combustion interne selon l'une quelconque des revendications précédentes,
**caractérisé en ce que** le boîtier (15) est disposé dans le sens longitudinal de la culasse (4) parallèlement à une rangée de cylindres du moteur à combustion interne (1).

6. Moteur à combustion interne selon l'une quelconque des revendications précédentes,
**caractérisé en ce que** l'entrée du gaz d'échappement se fait depuis les différents cylindres dans une chambre d'entrée ouverte (18) du boîtier (15).

7. Moteur à combustion interne selon la revendication 6,
**caractérisé en ce qu'**à l'intérieur de la chambre d'entrée (18) ou en contiguïté avec la chambre d'entrée (18), le système de traitement de gaz d'échappement (20) est disposé également dans le sens longitudinal.

8. Moteur à combustion interne selon la revendication 4,
**caractérisé en ce que**, sur une face frontale du boîtier (15), est disposé le distributeur d'écoulement (19) reliant la chambre d'entrée (18) au système de traitement de gaz d'échappement (20).
